Europäisches Patentamt

European Patent Office

Office européen des brevets

(19)

(11) Veröffentlichungsnummer : **0 027 640**
**B1**

(12) # EUROPÄISCHE PATENTSCHRIFT

(45) Veröffentlichungstag der Patentschrift :
15.12.82

(21) Anmeldenummer : 80106300.9

(22) Anmeldetag : 16.10.80

(51) Int. Cl.³ : **C 01 G 37/027**, **H 01 F 1/11**, **G 11 B 5/62**

(54) **Verfahren zur Herstellung von ferromagnetischem Chromdioxid sowie seine Verwendung zur Herstellung von magnetischen Aufzeichnungsträgern.**

(30) Priorität : 22.10.79 DE 2942646

(43) Veröffentlichungstag der Anmeldung :
29.04.81 (Patentblatt 81/17)

(45) Bekanntmachung des Hinweises auf die Patenterteilung : 15.12.82 Patentblatt 82/50

(84) Benannte Vertragsstaaten :
**DE FR GB IT NL**

(56) Entgegenhaltungen :
DE A 2 032 749
DE A 2 119 932
DE B 1 592 492
DE C 2 022 820
NL A 6 617 476
US A 2 923 683
US A 3 034 988

(73) Patentinhaber : **BASF Aktiengesellschaft**
**Carl-Bosch-Strasse 38**
**D-6700 Ludwigshafen (DE)**

(72) Erfinder : **Ohlinger, Manfred, Dr.**
**Anselm-Feuerbach-Strasse 13**
**D-6710 Frankenthal (DE)**
Erfinder : **Vaeth, Guenter**
**Woogstrasse 35**
**D-6703 Limburgerhof (DE)**
Erfinder : **Mueller, Norbert, Dr.**
**Maximilianstrasse 23**
**D-6701 Friedelsheim (DE)**
Erfinder : **Wettstein, Eugen**
**Jungholzstrasse 9**
**D-6728 Germersheim (DE)**

Jouve, 18, rue St-Denis, 75001 Paris, France

EP 0 027 640 B1

Verfahren zur Herstellung von ferromagnetischem Chromdioxid sowie seine Verwendung zur Herstellung von magnetischen Aufzeichnungsträgern

Die Erfindung betrifft ein Verfahren zur Herstellung von mit Fremdelementen modifiziertem hochkoerzitiven chromdioxid sowie seine Verwendung zur Herstellung von magnetischen Aufzeichnungsträgern.

Es sind eine Reihe von Verfahren bekannt, bei denen zur Herstellung von ferromagnetischem Chromdioxid von Chromoxiden oder von Mischungen von Chromoxiden mit einer durchschnittlichen Wertigkeit von mindestens 4 ausgegangen wird und das Verfahren bei erhöhtem Druck und erhöhter Temperatur in Anwesenheit von Wasser durchgeführt wird. Außerdem ist mehrfach beschrieben, daß durch Modifizierung eines solchen Chromdioxids mit einer Reihe von Metallen eine Verbesserung der magnetischen Eigenschaften des Endprodukts möglich wird. So beschreibt die US-A 30 34 988, ein verbessertes Chromdioxid durch die Umsetzung von Chromtrioxid in Gegenwart von einem Metall der Ordnungszahl 22-28 bzw. einer Verbindung desselben sowie einem Element der Gruppe V des Periodensystems und gegebenenfalls Wasser bei Temperaturen zwischen 300 und 500 °C und Drücken von bis zu 2 940 bar zu erhalten. Die auf diese Weise erhältlichen Materialien weisen Koerzitivfeldstärken von bestenfalls 34 kA/m auf. Nach einem weiteren Verfahren wie in der NL-A 66 17 476 offenbart, werden Chromdioxide oder Mischungen davon mit einer mittleren Wertigkeit des Chroms von mindestens 4 in Gegenwart von Alkalidichromaten und vorbekannten Dotierungsmitteln bei Temperaturen von 350 bis 500 °C und Drücken von 245 bis 980 bar behandelt. Hohe Koerzitivfeldstärken des resultierenden Produkts werden allerdings nur dann erhalten, wenn der Reaktionsdruck bei 980 bar liegt. Außerdem ist an diesem Verfahren nach-Sob/BL teilig, daß als Ausgangsmaterial ein aufwendig herzustellendes Chrom (III) oxid erforderlich ist.

Des weiteren ist aus der DE-C 20 22 820 bekannt, ein Chromdioxid mit hohen Koerzitivfeldstärken herzustellen, wenn bei dem üblichen Verfahren außer einem Zusatz von Antimon, Selen und Tellur oder ihren Verbindungen als einem ersten Modifizierungsmittel Eisen in der Form nadelförmiger Kristalle und/oder nadelförmiger Eisenoxid-Teilchen als zweites Modifizierungsmittel eingesetzt wird. Hierbei beträgt die Menge an eingesetztem Eisen 0,1 bis 10 Gew.% und die Gesamtmenge an Modifizierungsmittel bis zu 25 Gew.%.

Wenn auch diese und weitere ähnliche bekannte Verfahren es erlauben, ferromagnetische Chromdioxide mit hohen Koerzitivfeldstärken herzustellen, so bedarf es dabei meist hoher Anteile von Modifizierungsmitteln. Diese hohen Zusatzmengen ergeben zwar eine Verringerung der Magnetisierungswerte, jedoch bewirken sie eine insbesondere hinsichtlich des Einsatzes der Chromdioxide bei der Herstellung von magnetischen Aufzeichnungsträgern bei den elektroakustischen Eigenschaften sich nachteilig bemerkbar machende Kristallitgröße.

Es bestand daher die Aufgabe, Verfahren zur Herstellung von ferromagnetischen Chromdioxiden mit hohen Koerzitivfeldstärken unter gleichzeitiger Verringerung des hierfür erforderlichen Anteils an Modifizierungsmitteln bereitzustellen.

Es wurde nun überraschenderweise gefunden, daß sich ferromagnetische Chromdioxide durch Umsetzen von Oxiden des 3-wertigen und 6-wertigen Chroms bei erhöhtem Druck und erhöhter Temperatur in Gegenwart von Wasser unter Zusatz von zumindest Antimon (III) oxid als Modifizierungsmittel sowie gegebenenfalls weiterer Zusatzstoffe in einer 15 Gew.% nicht übersteigenden Menge gemäß der Aufgabe herstellen lassen, wenn das als Modifizierungsmittel eingesetzte Antimon (III) oxid zu mehr als ein Drittel in der kubischen Modifikation des Senarmontit vorliegt, eine spezifische Oberfläche nach BET zwischen 1,5 und 15 $m^2/g$ aufweist und in einer Gesamtmenge von kleiner 0,5 Gew.%, bezogen auf das resultierende Chromdioxid, zugesetzt wird.

Bei einer vorteilhaften Ausgestaltung des erfindungsgemäßen Verfahrens besteht das als Modifizierungsmittel eingesetzte Antimon (III) oxid zu mindestens 98 % aus Senarmontit mit einer spezifischen Oberfläche nach BET zwischen 3 und 10 $m^2/g$ und wird in einer Menge von 0,1 bis 0,5 Gew.%, bezogen auf das resultierende Chromdioxid, eingesetzt. Die Verwendung eines Zusatzes von Eisen in Form von insbesondere nadelförmiger Eisenoxidteilchen in einer Menge von 0,5 bis 15 Gew.%, bezogen auf das resultierende Chromdioxid als zweites Modifizierungsmittel beim erfindungsgemäßen Verfahren hat sich als besonders zweckmäßig herausgestellt.

Die Erfindung bezieht sich auf bekannte Verfahren zur Herstellung von ferromagnetischem Chromdioxid bei erhöhtem Druck und erhöhter Temperatur in Anwesenheit von Wasser. So wird beispielsweise beim vorliegenden Verfahren in einem Reaktionsbecher Wasser vorgelegt, unter Rühren Chromsäure eingetragen und die Modifizierungsmittel gemäß der erfindungsgemäßen Ausgestaltung dieses Verfahrens zugegeben. Unter weiterem Rühren wird dann Chrom (III) oxid in der für die Synproportionierungsreaktion erforderlichen stöchiometrischen Menge hinzugefügt. Die Bildung des Chromdioxids erfolgt in der sich anschließenden Behandlung der Mischung im Hochdruckreaktor bei 100 bis 700 bar und 200 bis 600 °C. Nach 10 bis 50 Stunden wird das Chromdioxid mechanisch aus dem Reaktionsbecher entfernt und ggf. in bekannter Weise oberflächlich durch Einwirkung von Reduktionsmitteln auf naßchemischen Wege stabilisiert. Das so hergestellte Chromdioxid besteht aus nadelförmigen Teilchen mit einer durchschnittlichen Teilchenlänge von 0,1 bis 2,0 μm, insbesondere 0,4 bis 0,9 μm bei

einem Längen-/Dicken-Verhältnis von 15 : 1 und einer nach BET bestimmten spezifischen Oberfläche zwischen 7 und 40 m²/g.

Eine weitere Verbesserung des erfindungsgemäßen Verfahrens läßt sich erreichen, wenn der Reaktionsmischung als zweites Modifizierungsmittel in an sich bekannter Weise nadelförmige Eisenoxid-Teilchen in Form von $\alpha$-FeOOH oder $\gamma$-Fe$_2$O$_3$ in einer Menge von 0,5 bis 15 Gew.% zugesetzt wird. Außerdem ist noch der Zusatz anderer üblicher Modifizierungsmittel möglich.

Überraschenderweise führt die erfindungsgemäße Modifizierung zu einem Chromdioxid, das trotz der geringen Mengen an zugesetztem Antimon (III) oxid von kleiner 0,5 Gew.%, vorzugsweise von 0,1 bis 0,5 Gew.% und einer Gesamtmodifizierungsmittelmenge von kleiner 15, insbesondere von 0,5 bis 5 Gew.%, jeweils bezogen auf das Endprodukt, bereits Koerzitivfeldstärken von größer 35 kA/m aufweist.

Die vorteilhaften Eigenschaften eines gemäß der Erfindung hergestellten Chromdioxids werden vor allem bei der Verwendung als magnetisches Material zur Herstellung von magnetischen Aufzeichnungsträger deutlich.

Die Verarbeitung eines solchermaßen hergestellen Chromdioxids erfolgt nach bekannten Methoden. Für die Herstellung der Magnetschicht werden 2 bis 5 Gewichtsteile Chromdioxid mit einem Teil des Bindemittels bzw.-gemisches sowie den geeigneten Dispergierhilfsmitteln, Gleitmitteln und weiteren üblichen Zusatzstoffen in einer Gesamtmenge bis zu 10 Gew.% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. In der Regel wird dann eine magnetische Ausrichtung der Chromdioxidteilchen in der aufgetragenen Schicht vor Trocknung der flüssigen Beschichtungsmischung auf dem Träger vorgenommen, was während 2 bis 5 Minuten bei Temperaturen von 50 bis 90 °C erfolgt, wenn es sich um Beschichtungen von thermoplastischen Trägern, z.B. Folien handelt. Durch Hindurchführen der resultierenden Magnetschichten zwischen geheizten und polierten Walzen, bevorzugt bei etwa 60 bis 90 °C, lassen sich Magnetschichten betragen im allgemeinen 1,5 bis 12 und insbesondere 3 bis 8 $\mu$m.

Als Polymerbindemittel können hierfür die für solche Zwecke bekannten Polymerbindemittel verwendet werden, wie Vinylchlorid-Copolymere, Acrylat-Copolymere, Polyvinylacetale, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- oder 1,3-Propylenglykol, 1,4-Butandiol, Diäthylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Festigkeit von 400 bis 420 kp/cm² und eine Dehnung von etwa 440 bis 560 %. Gut bewährt haben sich auch Polymerbindemittel auf der Basis eines Copolymerisates aus 70 bis 95 und insbesondere 75 bis 90 Gew.% Vinylchlorid und 5 bis 30 und insbesondere 10 bis 25 Gew.% eines Alkylesters einer olefinisch ungesättigten Carbonsäure mit 3 bis 5 C-Atomen, wie Acrylsäure, Methacrylsäure oder Maleinsäure, und bevorzugt mit 1 bis 3 C-Atomen im Alkylrest. Hervorzuheben sind hierbei die entsprechenden Vinylchlorid-Copolymerisate mit mindestens einem $C_1$- bis $C_3$-Dialkylmaleinat, wie Copolymerisate aus 70 bis 90 Gew.% Vinylchlorid, 5 bis 15 Gew.% Dimethylmaleinat und 5 bis 15 Gew.% Diathylmaleinat. Der K-Wert nach H. Fikentscher (Cellulose-Chemie 30 (1931), Seite 58 ff) der besonders geeigneten Copolymerisate liegt zwischen 40 und 60.

Die unter Verwendung des erfindungsgemäß hergestellten Chromdioxids gefertigten magnetischen Aufzeichnungsträger weisen die bekannt guten elektroakustischen und gegebenenfalls Video-Kenndaten bekannter Chromdioxid-Magnetbänder auf. Darüber hinaus sind sie aber besonders rauscharm und zusätzlich besonders kopierfest. Durch das geringe Betriebsrauschen ist die Dynamik der Bänder sowohl bei niederen, wie bei auch hohen Frequenzen besonders hoch, d.h. die Bänder können optimal ausgesteuert werden. Sie weisen dadurch beachtliche Vorteile gegenüber üblichen Chromdioxidbändern auf.

Die Erfindung sei anhand folgender Beispiele und Vergleichsversuche näher erläutert. Die in den nachstehenden Beispielen und Vergleichsversuchen genannten Teile und Prozente beziehen sich, soweit nicht anders angegeben, auf Gewicht. Volumenteile verhalten sich zu Teilen wie Liter zu Kilogramm.

## Beispiel 1

In einen Reaktionsbecher mit einem Volumen von 4 l werden 2,25 l Wasser vorgelegt. Dann werden unter Rühren zunächst 5,68 kg Chromsäureanhydrid (CrO$_3$) zugegeben. Nach 10 Minuten werden dazu 11,94 g Antimon (III) oxid (98 Gew.% Senarmontit) mit einer spez. Oberfläche von 3,2 m²/g (0,15 Gew.%, bezogen auf Chromdioxid) und 23,88 g nadelförmiges $\gamma$-Fe$_2$O$_3$ (0,30 Gew.%, bezogen auf Chromdioxid) zugegeben. Danach werden unter ständigem Rühren 2,88 kg Chrom (III) oxid eingetragen. Nach einer

3

weiteren Rührzeit von 20 Minuten wird der Reaktionsbecher in einen Autoklaven eingebaut und letzterer innerhalb von 15 Std. auf 270 °C aufgeheizt. Dabei bildet sich Chromdioxid. Durch den zusätzlich entstehenden Sauerstoff baut sich ein Druck auf, der bei Anstieg auf 450 bar über ein Regelventil konstant gehalten wird. Nach einem Temperatur-Druckzyklus von 270 °C und 450 bar über 15 Stunden wird der Reaktor innerhalb von 8 Stunden abgekühlt, entspannt und geöffnet. Das gebildete Chromdioxid wird aus dem Reaktor mechanisch ausgeräumt und gemahlen. Anschließend wird es in Wasser aufgeschlämmt, in welchem Eisen (II)-sulfat in der Menge gelöst ist, daß 2 Gew.% des nadelförmigen $CrO_2$ oberflächlich zu Chrom (III) oxid reduziert werden. Nach einer Verweilzeit unter Rühren von 60 Minuten wird die Chromdioxid-Suspension filtriert, wobei die löslichen Anteile durch Waschen entfernt werden. Die Trocknung des $CrO_2$-Filtergutes erfolgt innerhalb von 15 Stunden bei 110 °C.

An dem resultierenden Chromdioxid werden die magnetischen Eigenschaften mittels eines Schwingmagnetometers in einem Meßfeld von 160 kA/m bei einer mittleren Probendichte von 1,2 g/cm³ bestimmt, und zwar die Koerzitivfeldstärke $H_c$ in (kA/m), wowie die spezifische Remanenz $M_r/\rho$ und die spezifische Magnetisierung $M_s/\rho$ in (nTm³/g).

Die bestimmten Meßwerte sind in Tabelle 1 angegeben.

## Beispiel 2 bis 11

Es wird wie in Beispiel 1 beschrieben verfahren, jedoch jeweils mit den in Tabelle 1 angegebenen unterschiedlichen Mengen und Oberflächen. Die Maßergebnisse sind ebenfalls in Tabelle 1 aufgeführt.

## TABELLE 1

| | Beispiele | | | | | | | | | | |
|---|---|---|---|---|---|---|---|---|---|---|---|
| | 1 | 2 | 3 | 4 | 5 | 6 | 7 | 8 | 9 | 10 | 11 |
| Gew.% $Sb_2O_3$ | 0,15 | 0,15 | 0,15 | 0,15 | 0,20 | 0,20 | 0,20 | 0,20 | 0,25 | 0,25 | 0,25 |
| spez. Oberfl. $Sb_2O_3$ (m²/g) | 3,2 | 4,5 | 6,5 | 9,8 | 3,2 | 4,5 | 6,5 | 4,5 | 3,2 | 4,5 | 6,5 |
| Gew.% $\gamma$-$Fe_2O_3$ spez. Oberfl. | 0,30 | 0,30 | 0,30 | 0,30 | 0,50 | 0,50 | 0,50 | — | 1,20 | 1,20 | 1,20 |
| $\gamma$-$Fe_2O_3$ (m²/g) | 15,4 | 15,4 | 15,4 | 15,4 | 15,4 | 15,4 | 15,4 | — | 15,4 | 15,4 | 15,4 |
| $H_c$ | 39 | 39,5 | 40,5 | 40,9 | 43,1 | 43,8 | 44,1 | 42,0 | 47,9 | 48,5 | 49,1 |
| $M_r/\rho$ | 43,5 | 43,0 | 43,2 | 43,1 | 42,9 | 43,1 | 43,5 | 43,9 | 41,8 | 41,5 | 41,4 |
| $M_s/\rho$ | 83,0 | 81,8 | 82,3 | 82,3 | 80,8 | 82,2 | 82,9 | 83,4 | 80,1 | 79,7 | 79,5 |

## Beispiel 12

Die Herstellung des Chromdioxids erfolgt wie in Beispiel 1 beschrieben, jedoch werden 1065 g Chromsäureanhydrid, 533 g Chrom (III) oxid, 417 g Wasser, 4,4 g $\gamma$-$Fe_2O_3$ und 2,8 g Antimon (III) oxid eingesetzt. Letzeres besteht zu je 1,4 g, d.h. zu je 0,09 Gew.% bezogen auf das Endprodukt, aus Valentinit und aus Senarmontit mit den in Tabelle 2 genannten spezifischen Oberflächen. Die magnetischen Eigenschaften sind auch in Tabelle 2 angegeben.

## Beispiel 13

Es wird wie in Beispiel 12 angegeben verfahren, jedoch werden der Reaktionsmischung 1,86 g Senarmontit und 0,93 g Valentinit zugesetzt. Die übrigen Parameter und die Meßergebnisse sind in Tabelle 2 aufgeführt.

## Vergleichsversuch 1

Es wird wie in Beispiel 13 angegeben verfahren, jedoch mit einem Anteil von nur ein Drittel an Senarmontit, d.h. 1,86 g Valentinit und 0,93 g Senarmontit. Die weiteren Angaben sind in Tabelle 2 aufgeführt.

## Vergleichsversuch 2

Die Herstellung des Chromdioxids erfolgt wie in Beispiel 12 beschrieben, jedoch wird als Antimon (III) oxid nur Valentinit und zwar 2,8 g, d.h. 0,18 Gew.% bezogen auf das Endprodukt, mit einer spezifischen Oberfläche von 0,9 m²/g eingesetzt. Die Ergebnisse sind in Tabelle 2 aufgeführt.

### Vergleichsversuch 3

Es wird wie in Vergleichsversuch 6 beschrieben verfahren, jedoch werden 2,8 g Valentinit mit einer spezifischen Oberfläche von 4,3 m²/g eingesetzt. Die Ergebnisse sind in Tabelle 2 aufgeführt.

### Vergleichsversuch 4

Es wird wie in Vergleichsversuch 6 beschrieben verfahren, jedoch werden 5,6 g Valentinit mit einer spezifischen Oberfläche von 3,8 m²/g eingesetzt. Die Ergebnisse sind in Tabelle 2 aufgeführt.

### Beispiel B1

In einer 1000 Volumenteile fassenden zylindrischen Stahlmühle, in welcher 1000 Teile Stahlkugeln mit einem Durchmesser zwischen 4 und 7 mm enthalten sind, werden 115 Teile eines gemäß Beispiel 1 hergestellten Chromdioxids, 2 Teile Zinkstearat, 1,5 Teile Sojalecithin, 3 Teile eines Gemisches flüssiger Fettsäuren mit einem Schmelzpunkt zwischen 50 und 59 °C, 110 Teile Gemisches aus gleichen Teilen Tetrahydrofuran und 1,4 Dioxan sowie 200 Teilen einer 15 %igen Bindemittellösung, hergestellt durch Lösen von 19,5 Teilen eines elastomeren, thermoplastischen Polyurethans (erhalten gemäß DT-B 11 06 959 aus Adipinsäure, 1,4 Butandiol und 4,4'-Diphenylisocyanatodiphenylmethan) und 10,5 Teilen eines Vinylchlorid-Polymerisats aus 80 Teilen Vinylchlorid, 10 Teilen Dimethylmaleinat in 170 Teilen eines Gemisches aus gleichen Teilen Tetrahydrofuran und 1,4-Dioxan eingebracht. Die Mischung wird 5 Tage dispergiert, die erhaltene Dispersion unter Druck durch eine Glasfaser-Papier-Filterschicht filtriert und auf einer üblichen Beschichtungsmaschine mittels eines Linealgießers in einer solchen Dicke auf eine 12 µm dicke Polyäthylenterephthalatfolie aufgebracht, daß sich nach dem Trocknen und Kalandrieren eine Trockenschichtdicke von 5,1 µm ergibt. Unmittelbar nach dem Aufgießen der flüssigen Dispersion werden die nadelförmigen Chromdioxidteilchen durch ein Magnetfeld längs der Aufzeichnungsrichtung orientiert. Die Oberfläche der Magnetschicht weist eine mittlere Rauhigkeit Rz, gemessen nach DIN 4756, Blatt 1, Abschnitt 2.3.3, von 0,08 bis 0,10 µm auf. Die beschichtete Folie wird in 3.81 mm breite Magnetbänder geschnitten.

### TABELLE 2

| | | Beispiele | | | Vergleichsversuche | | |
|---|---|---|---|---|---|---|---|
| | | 12 | 13 | 1 | 2 | 3 | 4 |
| Senarmontit | Gew.% | 0,09 | 0,125 | 0,06 | — | — | — |
| Senarmontit | spez. Oberfl. | 3,2 | 3,2 | 3,2 | — | — | — |
| Valentimit | Gew.% | 0,09 | 0,06 | 0,125 | 0,18 | 0,18 | 0,36 |
| Valentinit | spez. Oberfl. | 3,8 | 3,8 | 3,8 | 0,9 | 4,3 | 3,8 |
| $\gamma\text{-}Fe_2O_3$ | Gew.% | 0,3 | 0,3 | 0,3 | 0,3 | 0,3 | 0,3 |
| $\gamma\text{-}Fe_2O_3$ | spez. Oberfl. | 15,4 | 15,4 | 15,4 | 15,4 | 15,4 | 15,4 |
| $H_c$ | | 38,8 | 43,7 | 35,1 | 30,2 | 29,7 | 34,0 |
| $M_r/\rho$ | | 49,2 | 50,0 | 48,6 | 48,7 | 48,2 | 48,7 |
| $M_s/\rho$ | | 90,9 | 89,8 | 91,8 | 91,5 | 91,4 | 91,6 |

### Beispiele B2 bis B11

Verarbeitung der Chromdioxidproben Beispiele 2 bis 11 unter gleichen Bedingungen wie Beispiel B1 zu Magnetogrammträgern.

Die Magnetbänder werden wie folgt geprüft.

1. Magnetische Eigenschaften

Die Bestimmung der magnetischen Eigenschaften der resultierenden Magnetbänder erfolgt mittels eines Schwingmagnetometers bei einem Meßfeld von 160 kA/m. Dabei wird die Koerzitivstärke Hc in kA/m, die remanente Magnetisierung Mr und die Sättigungsmagnetisierung $M_s$ in mT gemessen, sowie der Ausrichtfaktor Rf als der Quotient aus der Remanenz längs der magnetischen Vorzugsrichtung zu derjenigen in Querrichtung errechnet.

2. Elektroakustische Eigenschaften

Die Messung der elektroakustischen Banddaten erfolgt nach DIN 45 512, Blatt II gegen das Standard-Chromdioxidbezugsband C 520-R mit einem Vormagnetisierungsstrom von 20 mA. Alle elektroakustischen Banddaten, Tiefenaussteuerbarkeit AT bei 1 kHz, Höhenaussteuerbarkeit AH bei 10 kHz, Ruhege-

5

räuschspannungsabstand RGA und Kopierdämpfung Ko, sind auf Bezugsband C 520-R bezogen, wobei letzteres bei allen Meßgrößen gleich O dB gesetzt wird. Außerdem wird die Dynamik bei 1 kHz (DY 1) und bei 10 kHz (DY 10) bestimmt.

Die entsprechenden Meßgrößen aller Magnetbänder sind in Tabelle 3 aufgeführt.

## TABELLE 3

|  |  | H | $M_r$ | Rf | $A_T$ | $A_H$ | RGA | Ko | DY 1 | DY 10 |
|---|---|---|---|---|---|---|---|---|---|---|
| Beispiel | B1 | 31,5 | 165 | 2,83 | + 1,0 | + 1,0 | + 1,0 | + 4,0 | + 1,5 | + 1,5 |
| — | B2 | 39,8 | 160 | 2,72 | + 0,5 | + 1,1 | + 1,3 | + 3,5 | + 1,8 | + 2,4 |
| — | B3 | 41,1 | 158 | 2,68 | 0 | + 1,8 | + 1,7 | + 3,0 | + 1,7 | + 3,5 |
| — | B4 | 41,5 | 156 | 2,62 | − 0,2 | + 1,9 | + 1,9 | + 1,8 | + 1,7 | + 3,8 |
| — | B5 | 43,7 | 155 | 2,45 | − 0,6 | + 2,3 | + 2,0 | + 1,1 | + 1,4 | + 4,3 |
| — | B6 | 44,2 | 153 | 2,41 | − 0,8 | + 2,5 | + 2,2 | + 0,9 | + 1,4 | + 4,7 |
| — | B7 | 44,5 | 156 | 2,35 | − 1,1 | + 2,7 | + 2,4 | + 0,5 | + 1,3 | + 5,1 |
| — | B8 | 42,4 | 151 | 2,38 | − 0,5 | + 1,7 | + 2,1 | + 0,5 | + 1,6 | + 9,9 |
| — | B9 | 48,2 | 141 | 2,18 | − 2,0 | + 3,0 | + 2,7 | − 1,0 | + 0,7 | + 5,7 |
| — | B10 | 48,9 | 138 | 2,10 | − 2,2 | + 3,3 | + 3,0 | − 1,3 | + 0,8 | + 6,3 |
| — | B11 | 56,2 | 139 | 2,00 | − 2,6 | + 3,5 | + 3,2 | − 1,6 | + 0,8 | + 6,7 |

## Ansprüche

1. Verfahren zur Herstellung von ferromagnetischen Chromdioxid durch Umsetzen von Oxiden des 3-wertigen und 6-wertigen Chroms bei erhöhtem Druck und erhöhter Temperatur in Gegenwart von Wasser unter Zusatz von zumindest Antimon (III) oxid als Modifizierungsmittel sowie gegebenenfalls weiterer Zusatzstoffe in einer 15 Gew.% nicht übersteigenden Menge, dadurch gekennzeichnet, daß das als Modifizierungsmittel eingesetzte Antimon (III) oxid zu mehr als ein Drittel in der kubischen Modifikation des Senarmontit vorliegt, eine spezifische Oberfläche nach BET zwischen 1,5 und 15 m²/g aufweist und in einer Gesamtmenge von kleiner 0,5 Gew.%, bezogen auf das resultierende Chromdioxid, zugesetzt wird.

2. Verfahren gemäß Anspruch 1, dadurch gekennzeichnet, daß das als Modifizierungsmittel eingesetzte Antimon (III) oxid zu mindestens 98 % aus Senarmontit mit einer spezifischen Oberfläche nach BET zwischen 3 und 10 m²/g besteht und in einer Menge von 0,1 bis 0,5 Gew.%, bezogen auf das resultierende Chromdioxid, eingesetzt wird.

3. Verfahren gemäß Anspruch 1 oder 2, dadurch gekennzeichnet, daß neben dem Antimon (III) oxid als weiteres Modifizierungsmittel nadelförmige Eixenoxid-Teilchen in der Form des α-FeOOH oder γ-Fe₂O₃ in einer Menge von 0,5 bis 15 Gew.%, bezogen auf das Chromdioxid, eingesetzt werden.

4. Verwendung der gemäß Anspruch 1 bis 3 hergestellten ferromagnetischen Chromdioxide zur Herstellung von magnetischen Aufzeichnungsträgern.

## Claims

1. A process for the manufacture of ferromagnetic chromium dioxide by reacting oxides of trivalent and hexavalent chromium under superatmospheric pressure at an elevated temperature in the presence of water and of antimony (III) oxide as modifier, with or without other modifiers in an amount not exceeding 15 % by weight, wherein the antimony (III) oxide employed as modifier is, to the extent of more than one-third, present as the senarmontite cubic modification, has a specific surface area, measured by the BET method, of from 1.5 to 15 m²/g, and is added in a total amount of less than 0.5 % by weight, based on the resulting chromium dioxide.

2. A process as claimed in claim 1, wherein the antimony (III) oxide employed as modifier consists to the extent of at least 98 % of senarmontite having a specific surface area, measured by the BET method, of from 3 to 10 m²/g, and is employed in an amount of from 0.1 to 0.5 % by weight, based on the resulting chromium dioxide.

3. A process as claimed in claim 1 or 2, wherein acicular iron oxide particles in the form of alpha-FeOOH or gamma-Fe₂O₃ are employed, as additional modifier, in an amount of from 0.5 to 15 % by weight, based on the chromium dioxide.

4. The use of the ferromagnetic chromium dioxides manufactured as claimed in claims 1 to 3 for the production of magnetic recording media.

**Revendications**

1. Procédé de préparation de dioxyde de chrome ferromagnétique par réaction d'oxydes de valence 3 et de chrome de valence 6, à pression élevée et température élevée, en présence d'eau, avec addition d'au moins de l'oxyde d'antimoine (III), comme agent de modification, ainsi qu'éventuellement d'autres additifs, en proportion n'excédant pas 15 % en poids, caractérisé par le fait que l'oxyde d'antimoine (III) introduit comme agent de modification, se présente, pour plus du tiers, dans la modification cubique de Senarmontite, a une surface spécifique selon BET comprise entre 1,5 et 15 m$^2$/g et est ajouté en proportion totale inférieure à 0,5 % en poids, rapportée au dioxyde de chrome résultant.

2. Procédé selon la revendication 1, caractérisé par le fait que l'oxyde d'antimoine (III), introduit comme agent de modification, est constitué, pour au moins 98 %, de Senarmontite d'une surface spécifique selon BET comprise entre 3 et 10 m$^2$/g et est introduit en proportion de 0,1 à 0,5 % en poids, rapportée au dioxyde de chrome résultant.

3. Procédé selon les revendications 1 ou 2, caractérisé par le fait qu'outre l'oxyde d'antimoine (III), on introduit, comme autre agent de modification, des particules d'oxyde de fer aciculaires, sous forme du $\alpha$-FeOOH ou $\gamma$-Fe$_2$O$_3$, en proportion de 0,5 à 15 % en poids, rapportée au dioxyde de chrome.

4. Utilisation des dioxydes de chrome ferromagnétiques préparés selon l'une des revendications 1 à 3, pour la préparation de supports d'enregistrement magnétiques.